# EUROPÄISCHE PATENTSCHRIFT

(11) **EP 2 918 484 B1**
(45) Veröffentlichungstag und Bekanntmachung des Hinweises auf die Patenterteilung: **09.01.2019**
(21) Anmeldenummer: 15157595.8
(22) Anmeldetag: 04.03.2015
(51) Int. Cl.: B62D 63/06

(54) **Anhänger für einen Routenzug**
Trailer for a route train
Remorque de chariot tracteur

(30) Priorität: 06.03.2014 DE 102014002974
(43) Veröffentlichungstag der Anmeldung: 16.09.2015
(73) Patentinhaber: Jungheinrich Aktiengesellschaft, 22047 Hamburg (DE)
(72) Erfinder: Ziemann, Jörg, 21149 Hamburg (DE); Kraase, Arne, 21337 Lüneburg (DE)
(74) Vertreter: Hauck Patentanwaltspartnerschaft mbB

(56) Entgegenhaltungen:
- EP-A1- 1 352 815
- DE-A1-102007 022 525
- DE-U1-202009 001 933
- DE-U1-202009 013 359
- DE-U1-202013 001 255

## Beschreibung

Die vorliegende Erfindung betrifft einen Anhänger für einen Routenzug. Routenzüge werden im Rahmen der innerbetrieblichen Logistik und der Intralogistik zum Materialtransport eingesetzt. Ein Routenzug besteht typischerweise aus einem oder mehreren Schleppfahrzeugen, die einen Zug von aneinander gekoppelten Anhängern schleppen. Jeder Anhänger kann je nach Ausgestaltung einen oder mehrere zu transportierende Innenwagen aufnehmen.

Bei dem Aufbau der Anhänger für einen Routenzug wird grundsätzlich zwischen Portalanhängern, bei denen ein Einschieben des zu transportierenden Innenwagens von beiden Seiten erfolgen kann und rahmenbasierten Anhängern unterschieden, die einen zu transportierenden Innenwagen nur von einer Seite aufnehmen können. Der Innenwagen muss dabei keineswegs ein Wagen sein, der sich vollständig innerhalb des Anhängers befindet. Der Innenwagen kann auch über den Anhänger seitlich überstehen und so mit dem Anhänger transportiert werden. Als Innenwagen wird jede lasttragende Einheit angesehen, die zum Transport an einem Anhänger geeignet ist und bevorzugt auf Rädern oder Rollen verfahren werden kann. Neben der Unterscheidung im Hinblick auf die Aufnahme des Innenwagens ist bei den Anhängern für Transportzüge auch zu unterscheiden, ob der Innenwagen mit seinen Rollen oder Rädern während des Transportes vom Boden freikommt. Grundsätzlich sind Routenzüge bekannt, bei denen die geschleppten Innenwagen selbst rollen und in dem Anhänger geführt werden. Alternativ sind auch Anhänger bekannt, bei denen der Innenwagen angehoben wird und dessen Räder beim Transport vom Boden freikommen, so dass der Innenwagen getragen wird.

Ein gattungsgemäßer Zuganhänger ist aus DE 20 13 001 255 U1 bekannt. Der Routenzuganhänger besitzt ein Hubwerk in einem C -förmigen Rahmen.

Aus DE 20 2009 001 933 U1 ist ein Trailerzuganhänger mit einem C-förmigen Rahmen bekannt, an dem mehrere Hubzinken angeordnet sind.

Bei Anhängern mit einseitig beladbaren Rahmen, die einen Transport des Innenwagens im angehobenen Zustand erlauben, hat sich die Herstellung als relativ aufwendig herausgestellt, insbesondere im Hinblick auf kundenspezifische Wünsche. Die Anhänger bestehen aus einem Rahmen und einem Mittelsteg, auf oder an dem der Innenwagen transportiert werden kann.

Der Erfindung liegt die Aufgabe zugrunde, einen Anhänger für einen Routenzug bereitzustellen, dessen Aufbau auch bei kundenspezifischen Anforderungen leicht und flexibel erfolgen kann.

Erfindungsgemäß wir die Aufgabe durch einen Anhänger mit den Merkmalen aus Anspruch 1 gelöst. Vorteilhafte Ausgestaltungen bilden den Gegenstand der Unteransprüche.

Der erfindungsgemäße Anhänger ist ausgebildet und bestimmt für einen Routenzug oder einen Schleppzug, wie sie in der Intralogistik eingesetzt werden. Der Anhänger besitzt einen Rahmen, der in Längsrichtung, bezogen auf seine Schlepprichtung, eine Deichsel und eine Kupplung aufweist. Mit der Deichsel kann der Anhänger an ein schleppendes Fahrzeug gehängt werden. Über die Kupplung kann ein geschleppter Anhänger von dem erfindungsgemäßen Anhänger geschleppt werden. Auch die umgekehrte Anordnung von Kupplung und Deichsel ist möglich. Quer zur Schlepprichtung besitzt der Rahmen einen seitlich offenen Aufnahmeraum für einen zu transportierenden Innenwagen. In dem Aufnahmeraum ist ein Mittelsteg angeordnet. Erfindungsgemäß ist der Rahmen mit ersten Verbindungsmitteln jeweils für Deichsel und Kupplung ausgestattet. Ebenso ist der Rahmen erfindungsgemäß mit zweiten Verbindungsmitteln für den Mittelsteg ausgestattet. Die zweiten Verbindungsmittel sind derart ausgebildet, dass eine lösbare Verbindung zwischen Mittelsteg und Rahmen hergestellt werden kann. Die Unterscheidung in erste und zweite Verbindungsmittel betrifft lediglich die Verwendung der Verbindungsmittel an dem Anhänger und impliziert nicht, das erste und zweite Verbindungsmittel voneinander verschieden sind. Vielmehr können das erste und zweite Verbindungsmittel baugleich ausgebildet sein, aber an unterschiedlichen Positionen des Rahmens positioniert sein.

Erfindungsgemäß sind die Verbindungsmittel für Rahmen und Mittelsteg derart ausgebildet, dass eine form-, kraft- und/oder reibschlüssige Verbindung zwischen Rahmen und Mittelsteg hergestellt wird. Insbesondere durch die Kombination verschiedener Verbindungen kann eine zur Aufnahme von Lasten ausreichend stabile Verbindung hergestellt werden.

Erfindungsgemäß sind Rahmen und Mittelsteg als zwei separate Bauteile ausgebildet, die über einen als Verbindungsmittel dienenden Befestigungsflansch miteinander lösbar verbunden sind. Auch ist es möglich, dass sowohl Mittelsteg als auch Rahmen jeweils einen Befestigungsflansch besitzen, die flächig aufeinander liegend miteinander verbunden, beispielsweise verschraubt, werden.

Bevorzugt ist der Mittelsteg tiefliegend an dem Rahmen befestigt, so dass der Rahmen den nach unten von der Oberseite des Mittelstegs begrenzten Aufnahmeraum auch seitlich begrenzt. Erfindungsgemäß weist der Rahmen an seiner Unterseite den Befestigungsflansch zur stirnseitigen Befestigung des Mittelstegs auf, so dass der Aufnahmeraum an mindestens drei Seiten von dem Rahmen und nach unten von dem Mittelsteg begrenzt ist. Zusätzlich kann bevorzugt der Mittelsteg stirnseitig einen Befestigungsflansch zur Befestigung an dem Rahmen aufweisen, wobei der Aufnahmeraum wieder an mindestens drei Seiten von dem Rahmen und von unten von dem Mittelsteg begrenzt ist. Der Höhenversatz zwischen Mittelsteg und U-förmigem Rahmen ist in besonderer Weise dafür geeignet als Verbindungsmittel einen für eine Schraub- oder Bolzenverbindung geeigneten Flansch vorzusehen, da ein auf diese Weise vorstehender Befestigungsflansch den besonderen Vorteil einer leichten und gut zugänglichen Montage an dem Rahmen besitzt.

In einer bevorzugten Ausgestaltung weisen die Verbindungsmittel für Rahmen und Mittelsteg eine Schraub- und/oder Bolzenverbindung auf. Mit Hilfe einer Schraub- und/oder Bolzenverbindung kann eine lösbare Verbindung zwischen Rahmen und Mittelsteg hergestellt werden, die es erlaubt, je nach vorgesehenem Einsatz oder Verwendung des Anhängers einen Mittelsteg der gewünschten Bauart und Ausstattung mit einem Rahmen der gewünschten Bauart und Ausstattung zu verbinden.

In einer weiteren bevorzugten Ausgestaltung sind auch die Verbindungsmittel für Rahmen und für Deichsel sowie Kupplung zur Herstellung einer lösbaren Verbindung ausgebildet. Dies erleichtert das Zusammenstellen eines Anhängers mit den gewünschten Eigenschaften hinsichtlich Deichsel und Kupplung.

Der erfindungsgemäße Anhänger besteht im Wesentlichen aus drei Baugruppen oder Komponenten, die miteinander lösbar verbunden sind. Dies erlaubt, einen Anhänger nach kundenspezifischen Wünschen sehr flexibel zu konfigurieren. Je nach Wunsch können geeignete Deichsel und Kupplungen mit dem Rahmen verbunden werden, ebenso wie ein geeignet ausgebildeter Mittelsteg mit dem Rahmen verbunden werden kann.

In einer bevorzugten Ausgestaltung besitzt der Rahmen im Wesentlichen eine U-Form. Hierbei bilden die Schenkel des U die Orte, an denen Deichsel und Kupplung an den Rahmen angesetzt werden können.

In einer bevorzugten Ausgestaltung ist der Mittelsteg mit einem Fahrwerk versehen. Bevorzugt handelt es sich bei dem Fahrwerk des Mittelstegs um das einzige Fahrwerk des Anhängers.

Für ein spurtreues Fahrverhalten des Anhängers ist bevorzugt vorgesehen, dass der Mittelsteg mittig an dem U-förmigen Rahmen oder mittig zwischen den Koppelpunkten von Deichsel und Kupplung ausgebildet ist. Je nach Ausgestaltung von Deichsel und Kupplung sind deren Koppelpunkte in der Regel auch die Punkte, an denen ein Verschwenken gegenüber dem schleppenden oder geschleppten Fahrzeug erfolgt.

In einer bevorzugten Ausgestaltung ist an dem Rahmen in Schlepprichtung jeweils ein Befestigungsflansch als Verbindungsmittel für die Deichsel und für die Kupplung vorgesehen. Alternativ oder zugleich können Deichsel und Kupplung an ihren rahmenseitigen Enden einen Befestigungsflansch als Verbindungsmittel besitzen.

In einer bevorzugten Ausgestaltung ist der Mittelsteg seitlich mit zwei Rampen ausgestattet, auf die der zu transportierende Innenwagen aufgeschoben werden kann, um vom Boden freizukommen. Alternativ oder zusätzlich kann der Mittelsteg auch mit einer Hubeinrichtung versehen sein, die einen zu transportierenden Innenwagen anhebt.

Die Vorteile der vorliegenden Erfindung werden besonders deutlich für einen Satz von erfindungsgemäßen Anhängern. Der Satz weist mindestens einen Rahmen und mehrere, mit dem Rahmen lösbar verbindbare Mittelstege auf, wobei jeder Rahmen mit jedem Mittelsteg zu dem Anhänger verbindbar ist. Mehrere Rahmen und mehrere Mittelstege beziehen sich hierbei darauf, dass möglicherweise mehrere Rahmen mit einer verschiedenen Bauart oder einem verschiedenen Rahmentyp vorliegen und auch die montierbaren Mittelstege unterscheiden sich in Gestalt, Form, Funktion und/oder Ausstattung. Mit diesem Satz kann ein Anhänger ohne Umkonstruktion oder großen Aufwand entsprechend den Anforderungen durch einen Nutzer konfiguriert werden.

In einer weiteren bevorzugten Ausgestaltung sind bei dem Satz mehrere Rahmen vorgesehen, die sich in ihrer Rahmenstärke und/oder Rahmenhöhe voneinander unterscheiden. Je nach beabsichtigtem Einsatz können die Rahmen unterschiedlich stark und/oder hoch ausgebildet sein. Ebenso ist es möglich, die Mittelstege mit oder ohne Rollen auszuführen, wobei in diesem Fall die Rahmen in ihrem Fahrwerk entsprechend angepasst sein müssen. Grundsätzlich ist es auch möglich, dass die Rahmen mit verschiedenen Fahrwerken ausgestattet sind. Beispielsweise können einer oder mehrere Rahmen in dem Satz mit vier Lenkrollen, bevorzugt in den Ecken des Rahmens, ausgestattet sein. Der Mittelsteg kann beispielsweise mit zwei oder nur mit einer zentral angeordneten Bockrolle ausgestattet sein. Die Bockrollen können beispielsweise auch gefedert sein, um eine gute Lage des Anhängers auf dem Untergrund sicherzustellen. In einer alternativen Ausgestaltung können die Rollen am Mittelsteg auch mit einem Antrieb ausgerüstet sein. Bei einem drei- oder vierrädrigen Fahrwerk an dem Rahmen ist es möglich, den Mittelsteg auch ohne Rollen auszubilden, wobei dann der Rahmen mit gelenkten Rollen ausgestattet ist. Für den Satz von Rahmen und Mittelsteg ist es auch möglich, verschiedene Rahmenlängen vorzusehen, die für die Aufnahme von einer oder von mehreren Innenwagen bzw. Paletten ausgestattet ist. Hierbei ist es auch möglich, den Rahmen mit mehr als einem Mittelsteg zur Abstützung der Innenwagen auszustatten.

Eine bevorzugte Ausgestaltung des erfindungsgemäßen Anhängers wird nachfolgend näher erläutert. Es zeigen:
- Fig. 1: den erfindungsgemäßen Anhänger in einer perspektivischen Ansicht mit eingeschobenem Innenwagen,
- Fig. 2: den Anhänger aus Fig. 1 ohne eingeschobenen Innenwagen,
- Fig. 3: den Zusammenbau des erfindungsgemäßen Anhängers mit anzusetzendem Mittelsteg mit Hubeinrichtung,
- Fig. 4: den Anbau eines Mittelstegs mit rampenförmiger Aufschiebehilfe seitlich am Mittelsteg,
- Fig. 5: den Anhängerrahmen in einer Ansicht von oben und
- Fig. 6: den Anhängerrahmen mit Flansch in einer perspektivischen Ansicht von der Seite.

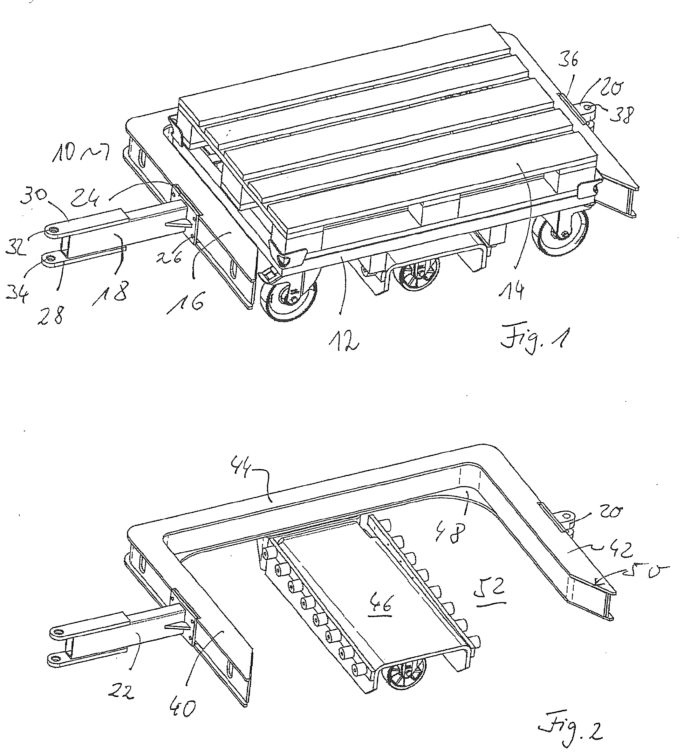

Fig. 1 zeigt den erfindungsgemäßen Anhänger 10, in den ein Innenwagen 12 mit einer aufgenommenen Palette 14 eingeschoben ist. Der Anhänger 10 besitzt einen U-förmigen Rahmen 16 mit einer Deichsel 18 an einer Seite und einer Anhängerkupplung 20 an der gegenüberliegenden Seite. Die Deichsel 18 besteht aus einem starren Deichselarm 22, der als ein rechteckiges Hohlprofil ausgebildet ist.

Das zum Anhänger weisende Ende des Deichselarms 22 ist mit einer Flanschplatte 24 versehen, die in ihrem Ecken jeweils eine Bohrung 26 aufweist. Das gegenüberliegende Ende des Deichselarms 22 ist durch zwei Schenkelplatten 28, 30 begrenzt. Die Schenkelplatten 28, 30 besitzen miteinander fluchtende Bohrungen 32, 34. Über die Flanschplatte 24 ist die Deichsel starr an dem Rahmen 16 befestigt.

Hierzu können Befestigungsbolzen durch die Bohrung 26 und eine korrespondierende Rahmenbohrung (nicht dargestellt) geführt werden. Auch ist es möglich, alternativ oder zusätzlich die Flanschplatte 24 mit dem Rahmen zu verschweißen. Wie in Fig. 1 zu erkennen, ist die Verbindung der Kupplung 20 im Wesentlichen ähnlich zu der Verbindung des Deichselarms 22 mit dem Rahmen.

Auch die Kupplung 20 besitzt eine Flanschplatte 36, mit der diese an dem Rahmen 16 befestigt ist. Die Kupplung 20 besitzt zudem eine durchgehende Kupplungsbohrung 38 zur Aufnahme eines Kupplungszapfens (nicht dargestellt).

Der im Wesentlichen U-förmige Rahmen besteht aus drei Profilschenkeln, die jeweils in Doppel-T-Form ausgebildet sind. Auch andere Profilformen wie beispielsweise Rechteckprofile sind möglich. Wie in Fig. 2 dargestellt, trägt der Schenkel 40 die Deichsel 22, der Schenkel 42 die Kupplung 20 und der Schenkel 44 einen Mittelsteg 46. Der Übergang zwischen den Schenkeln 42 und 44 sowie 40 und 44 ist mit abgerundeten Versteifungsecken 48 versehen, um die an dem Rahmen 16 angreifenden Zugkräfte von der Kupplung 20 zur Deichsel 22 zu leiten. Zwischen den Schenkeln 40 und 42 befindet sich der Aufnahmeraum 52, in den der Mittelsteg 46 vorsteht. Seitlich des Aufnahmeraums 52 besitzen die Schenkel 42 und 40 eine Abschrägung 50, die ein Einschieben des Innenwagens 12 in den Innenraum 52 erleichtert.

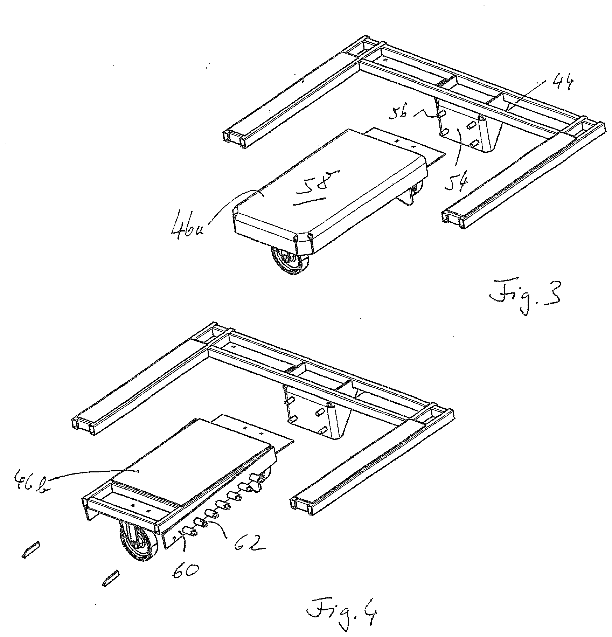

Fign. 3 und 4 zeigen einen Befestigungsflansch 54, der an dem Verbindungsschenkel 44 angesetzt ist. Der Befestigungsflansch 54 steht im Wesentlichen senkrecht zu der von den Schenkeln 40, 42, 44 des U-förmigen Rahmens 16 aufgespannten Ebene. Aus dem Befestigungsflansch 54 stehen Bolzenenden 56 vor, die die Montage eines Mittelstegs 46a erlauben. Der Mittelsteg 46a wird von einem einteiligen Blech 58 bedeckt. Unter dem Blech 58 kann eine Hubeinrichtung angeordnet sein, so dass ein in den Anhängerrahmen eingeschobener Innenwagen über die Hubeinrichtung angehoben wird. Fig. 4 zeigt eine alternative Ausgestaltung des Anhängers mit einem Mittelsteg 46b, der an seinen Seiten jeweils eine Rampe 60 besitzt. Aus der Rampe 60 stehen seitlich drehbar gelagerte Walzenkörper 62 vor. Ein zu transportierender Innenwagen wird über die Rampe mit ihren Walzenkörpern 62 in eine angehobene Position geschoben, wo er für den Transport gesichert werden kann.

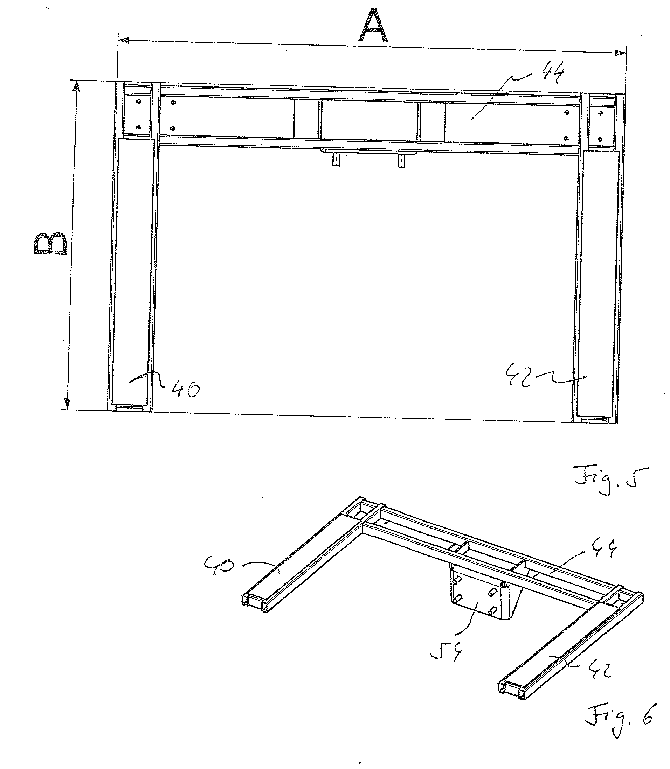

Fign. 5 und 6 zeigen den Rahmen 16 mit einem Befestigungsflansch 54. Der Befestigungsflansch 54 ist mittig an dem Schenkel 44 angebracht, beispielsweise verschweißt. An den in den Fign. 5 und 6 dargestellten Rahmen können nun, je nach Kundenwunsch, spezifische Anbauten für Deichsel und Anhängerkupplung sowie für den Mittelsteg ohne großen Aufwand angesetzt werden. Auf diese Weise entsteht ein modularer Rahmenanhänger, der aus mehreren, unabhängig voneinander und weitgehend unabhängig vom Kundenauftrag vorgefertigten Modulen und Funktionsgruppen mit definierten Schnittstellen besteht. Für den Mittelsteg kann beispielsweise vorgesehen sein, diesen mit Rollen für leichte Güter und deren manuelles Einschieben und Anheben auf den Mittelsteg auszustatten. Auch können schräge Rollbahnen als schiefe Ebene zur manuellen Bedienung vorgesehen sein. Wird eine Hubeinheit verwendet, so kann hier eine hydraulische, pneumatische oder elektrische Hubeinheit vorgesehen sein. Auch Mittelstege mit besonders schmalbauenden Hubeinheiten oder zwei geteilten Hubeinheiten sind möglich.

Im Hinblick auf die Kombination von Deichsel und Deichselkupplung können ebenfalls verschiedene Bauformen vorgesehen sein. So ist es beispielsweise möglich, eine Knicklenkerdeichsel vorzusehen, die momentensteif in vertikaler Richtung ausgebildet ist. Auch können vertikal bewegliche und/oder höhenverstellbare Deichseln vorgesehen sein. Auch könnten besonders lange und dünne Deichseln an den Rahmen angesetzt werden.

Mit dem Mittelsteg zusammen sind auch unterschiedliche Formen von Fahrwerken möglich. So kann ein Fahrwerk mit Nylonrollen bei kleinem Durchmesser und Vulkollanrollen mit großem Durchmesser vorgesehen sein. Auch können, je nach eingesetztem Innenwagen, Fahrwerke mit unterschiedlicher Höhe eingesetzt werden. Grundsätzlich sind sogar gefederte Fahrwerke für einen Außeneinsatz möglich.

Bei dem erfindungsgemäßen Anhänger ist es möglich, sämtliche der vorbeschriebenen Komponenten für die Mittelstege, deren Fahrwerke und die Deichsel vorzumontieren und zu bevorraten und dann auftragsspezifisch zu montieren.

## Patentansprüche

1. Anhänger (10) für einen Routenzug mit einem Rahmen (16), der in Schlepprichtung eine Deichsel (18) und eine Kupplung (20) aufweist und der quer zur Schlepprichtung einen seitlich offenen Aufnahmeraum (52) für einen zu transportierenden Innenwagen aufweist, wobei in dem Aufnahmeraum (52) ein Mittelsteg (46) angeordnet ist,
- der Rahmen (16) erste Verbindungsmittel jeweils für Deichsel und Kupplung aufweist und
- der Rahmen (16) zweite Verbindungsmittel für den Mittelsteg (46) zur lösbaren Verbindung von Rahmen (16) und Mittelsteg (46) aufweist, wobei die zweiten Verbindungsmittel für eine form-, kraft- und/oder reibschlüssige Verbindung zwischen Rahmen (16) und Mittelsteg (46) ausgebildet sind, die als zwei separate Bauteile ausgebildet sind,
- **dadurch gekennzeichnet, dass** Rahmen (16) und Mittelsteg (46) über einen Befestigungsflansch als Verbindungsmittel miteinander verbunden sind, wobei der Rahmen (16) an seiner Unterseite den Befestigungsflansch zur stirnseitigen Befestigung des Mittelstegs (46) aufweist, so dass der Aufnahmeraum an mindestens drei Seiten von dem Rahmen (16) und nach unten von dem Mittelsteg (46) begrenzt ist.

2. Anhänger nach Anspruch 1, **dadurch gekennzeichnet, dass** die Verbindungsmittel für Rahmen (16) und Mittelsteg (46) eine Schraub- und/oder Bolzenverbindung aufweisen.

3. Anhänger nach Anspruch 1 oder 2, **dadurch gekennzeichnet, dass** die Verbindungsmittel für Rahmen (16) und Deichsel (18) sowie Kupplung (20) zur Herstellung einer lösbaren Verbindung ausgebildet sind.

4. Anhänger nach einem der Ansprüche 1 bis 3, **dadurch gekennzeichnet, dass** der Rahmen (16) im Wesentlichen eine U-Form aufweist.

5. Anhänger nach einem der Ansprüche 1 bis 4, **dadurch gekennzeichnet, dass** der Mittelsteg (46) mit einem Fahrwerk versehen ist.

6. Anhänger nach einem der Ansprüche 1 bis 5, **dadurch gekennzeichnet, dass** der Mittelsteg (46) mittig an dem U-förmigen Rahmen (16) oder zwischen den Koppelpunkten von Deichsel (18) und Kupplung (20) angeordnet ist.

7. Anhänger nach einem der vorangehenden Ansprüche, **dadurch gekennzeichnet, dass** an dem Rahmen (16) in Schlepprichtung jeweils ein Befestigungsflansch als Verbindungsmittel für die Deichsel (18) und für die Kupplung (20) vorgesehen ist.

8. Anhänger nach einem der vorangehenden Ansprüche, **dadurch gekennzeichnet, dass** Deichsel (18) und Kupplung (20) jeweils an ihrem rahmenseitigen Ende einen Befestigungsflansch als Verbindungsmittel aufweisen.

9. Anhänger nach einem der vorangehenden Ansprüche, **dadurch gekennzeichnet, dass** an dem Mittelsteg (46) seitlich jeweils eine Rampe vorgesehen ist, auf die der Innenwagen (12) aufschiebbar ist.

10. Anhänger nach einem der vorangehenden Ansprüche, **dadurch gekennzeichnet, dass** der Mittelsteg (46) eine Hubeinrichtung aufweist.

11. Satz für einen Anhänger nach einem der Ansprüche 1 bis 10, bestehend aus mindestens einem Rahmen (16) und mehreren, mit dem Rahmen (16) lösbar verbindbaren Mittelstegen (46), wobei jeder Rahmen (16) mit jedem der Mittelstege (46) zu dem Anhänger lösbar verbindbar ist.

12. Satz für einen Anhänger nach Anspruch 11, **dadurch gekennzeichnet, dass** mehrere Rahmen (16) vorgesehen sind, die sich in ihrer Rahmenstärke und/oder Rahmenhöhe unterschieden und jeweils mit jedem der Rahmen (16) verbindbar sind.

13. Satz für einen Anhänger nach Anspruch 11 oder 12, **dadurch gekennzeichnet, dass** mehrere Mittelstege (46) vorgesehen sind, die mit oder ohne Rollen ausgeführt sind.

14. Satz für einen Anhänger nach Anspruch 11 bis 13, **dadurch gekennzeichnet, dass** mehrere Rahmen (16) vorgesehen sind, die sich in ihrem Fahrwerk unterscheiden.

## Claims

1. A trailer (10) for a tugger train having a frame (16), which, in the tow direction, has a drawbar (18) and a coupling (20), and which, transverse to the tow direction, has a laterally open receiving space (52) for an inner wagon to be transported, wherein a central web (46) is arranged in the receiving space (52),
- the frame (16) has first connection means in each case for the drawbar and coupling, and
- the frame (16) has second connecting means for the central web (46) for releasably connecting the frame (16) and central web (46), wherein the second connecting means are designed for a form-fitting, force-fitting and/or friction-fitting connection between the frame (16) and the central web (46), which are designed as two separate components,
**characterized in that** the frame (16) and central web (46) are connected to each other using a mounting flange as a connecting means, wherein the frame (16) at the bottom side thereof has the mounting flange for the face-side attachment of the central web (46), such that the receiving space is delimited at least on three sides by the frame(16), and downward by the central web(46).

2. The trailer according to claim 1, **characterized in that** the connection means for the frame (16) and central web (46) have a screw connection and/or bolt connection.

3. The trailer according to claim 1 to 2, **characterized in that** the connection means for the frame (16) and drawbar (18) as well as the coupling (20) are designed to produce a releasable connection.

4. The trailer according to one of the claims 1 to 3, **characterized in that** the frame (16) is substantially U-shaped.

5. The trailer according to one of the claims 1 to 4, **characterized in that** the central (46) web has an undercarriage.

6. The trailer according to one of the claims 1 to 5, **characterized in that** the central web (46) is arranged centrally on the U-shaped frame (16) or between the coupling points of the drawbar (18) and coupling (20).

7. The trailer according to one of the preceding claims, **characterized in that** a mounting flange is provided on the frame (16) in the tow direction, in each case as a connection means for the drawbar (18) and for the coupling (20).

8. The trailer according to one of the preceding claims, **characterized in that** the drawbar (18) and coupling (20) each have on the frame-side ends thereof a mounting flange as a connection means.

9. The trailer according to one of the preceding claims, **characterized in that** on each side of the central web (46), a ramp is provided upon which the inner wagon (12) can be pushed.

10. The trailer according to one of the preceding claims, **characterized in that** the central web (46) has a lifting apparatus.

11. A set for a trailer according to one of the claims 1 to 10, comprised of at least one frame (16) and a plurality of central webs (46) that can be releasably connected to the frame (16), wherein each frame (16) can be releasably connected to the trailer with any of the central webs (46).

12. The set for a trailer according to claim 11, **characterized in that** a plurality of frames (16) are provided which differ in the frame strength thereof and/or frame height thereof, and in each case can be connected to each of the frames (16).

13. The set for a trailer according to claim 11 or 12, **characterized in that** a plurality of central webs (46) are provided which are implemented with or without rollers.

14. The set for a trailer according to claim 11 to 13, **characterized in that** a plurality of frames (16) are provided, which differ in the undercarriage thereof.

## Revendications

1. Remorque (10) d'un chariot tracteur avec un châssis (16), qui présente un timon (18) dans le sens du remorquage et un attelage (20) et qui présente un espace de réception (52) ouvert latéralement pour loger un chariot intérieur à transporter, dans laquelle un pont central (46) est disposé dans l'espace de réception (52),
- le châssis (16) présente de premiers moyens de liaison destinés respectivement tant au timon qu'à l'attelage et
- le châssis (16) présente de seconds moyens de liaison destinés au pont central (46) servant à l'assemblage amovible du châssis (16) et du pont central (46), dans laquelle les seconds moyens de liaison sont conçus de manière à assurer une liaison par complémentarité de forme, de force et/ou par friction entre le châssis (16) et le pont central (46), qui sont constitués comme deux composants séparés,
- **caractérisée en ce que** le châssis (16) et le pont central (46) sont raccordés l'un à l'autre par une bride de fixation servant de moyen de liaison, dans laquelle le châssis (16) présente sur sa face inférieure la bride de fixation pour arrimer le pont central (46) sur sa face frontale, si bien que l'espace de réception est limité sur au moins trois côtés par le châssis (16) et vers le bas par le pont central (46).

2. Remorque selon la revendication 1, **caractérisée en ce que** les moyens de liaisons du châssis (16) et du pont central (46) présentent un assemblage par vissage et/ou par boulonnage.

3. Remorque selon la revendication 1 ou 2, **caractérisée en ce que** les moyens de liaison du châssis (16) et du timon (18) ainsi que de l'attelage (20) sont conçus de manière à créer un assemblage amovible.

4. Remorque selon l'une des revendications 1 à 3, **caractérisée en ce que** le châssis (16) présente essentiellement une forme en U.

5. Remorque selon l'une des revendications 1 à 4, **caractérisée en ce que** le pont central (46) est équipé d'un train de roulement.

6. Remorque selon l'une des revendications 1 à 5, **caractérisée en ce que** le pont central (46) est disposé au milieu sur le châssis (16) en forme de U ou entre les points de couplage du timon (18) et de l'attelage (20).

7. Remorque selon l'une des revendications précédentes, **caractérisée en ce qu'**une bride de fixation est prévue respectivement sur le châssis (16) dans le sens du remorquage comme moyen de liaison du timon (18) et de l'attelage (20).

8. Remorque selon l'une des revendications précédentes, **caractérisée en ce que** le timon (18) et l'attelage (20) présentent respectivement une bride de fixation servant de moyen de liaison à leur extrémité du côté du châssis.

9. Remorque selon l'une des revendications précédentes, **caractérisée en ce qu'**une rampe est prévue respectivement de part et d'autre du pont central (46), sur laquelle il est possible de faire glisser le chariot intérieur (12).

10. Remorque selon l'une des revendications précédentes, **caractérisée en ce que** le pont central (46) présente un dispositif de levage.

11. Ensemble destiné à une remorque selon l'une des revendications 1 à 10, comprenant au moins un châssis (16) et plusieurs ponts centraux (46) pouvant être reliées au châssis (16) de manière amovible, dans lequel chaque châssis (16) peut être relié de manière amovible à chacun des ponts centraux (46) pour former la remorque.

12. Ensemble destiné à une remorque selon la revendication 11, **caractérisé en ce que** plusieurs châssis (16) sont prévus, qui se différencient par leur épaisseur et/ou leur hauteur et qui peuvent être reliés respectivement à chacun des châssis (16).

13. Ensemble destiné à une remorque selon la revendication 11 ou 12, **caractérisé en ce que** plusieurs ponts centraux (46) sont prévus, qui sont exécutés avec ou sans galets de roulement.

14. Ensemble destiné à une remorque selon la revendication 11 à 13, **caractérisé en ce que** plusieurs châssis (16) sont prévus, qui se différencient par leur train de roulement.
